# EUROPÄISCHE PATENTSCHRIFT

(11) **EP 4 337 488 B1**
(45) Veröffentlichungstag und Bekanntmachung des Hinweises auf die Patenterteilung: **04.02.2026**
(21) Anmeldenummer: 22720655.4
(22) Anmeldetag: 04.04.2022
(51) Int. Cl.: B60K 35/00, G02B 27/01, B60K 35/235, B60K 35/28, G02B 27/00

(54) **VERFAHREN UND VORRICHTUNG ZUM BETREIBEN EINES FRONTSCHEIBEN-ANZEIGESYSTEMS MIT EINER ABDECKERKENNUNG SOWIE FRONTSCHEIBEN-ANZEIGESYSTEM**
METHOD AND DEVICE FOR OPERATING A WINDSCREEN DISPLAY SYSTEM WITH A COVER DETECTION SYSTEM, AND WINDSCREEN DISPLAY SYSTEM
PROCEDE ET DISPOSITIF POUR FAIRE FONCTIONNER UN SYSTEME D'AFFICHAGE DE PARE-BRISE AVEC UNE DETECTION DE COUVERTURE ET SYSTEME D'AFFICHAGE DE PARE-BRISE

(30) Priorität: 10.05.2021 DE 102021112097
(43) Veröffentlichungstag der Anmeldung: 20.03.2024
(73) Patentinhaber: Bayerische Motoren Werke Aktiengesellschaft, 80809 München (DE)
(72) Erfinder: RÖLLE, Christopher, 82194 Gröbenzell (DE); HEJDA, Tomas, 85375 Neufahrn (DE); KRATZ, Sadzida, 80809 München (DE)
(86) Internationale Anmeldenummer: PCT/EP2022/058904
(87) Internationale Veröffentlichungsnummer: WO 2022/238050

(56) Entgegenhaltungen:
- EP-A1- 2 693 253
- EP-A1- 2 693 256
- EP-A2- 2 233 962
- DE-A1- 102012 021 972
- JP-A- 2010 243 940
- KR-A- 20140 131 760

## Beschreibung

### Technisches Gebiet

Die Erfindung betrifft Frontscheiben-Anzeigesysteme, insbesondere Reflexionsanzeigesysteme, wie beispielsweise PHUD, für Kraftfahrzeuge. Insbesondere betrifft die vorliegende Erfindung Maßnahmen zur Erkennung eines im optischen Strahlenverlauf des Frontscheiben-Anzeigesystems befindlichen Objekts.

### Technischer Hintergrund

Reflexionsanzeigesysteme, wie beispielsweise PHUD, umfassen eine auf der Oberseite der Instrumententafel angeordnete Anzeigeeinheit, deren Anzeige sich auf der Innenseite der Frontscheibe spiegelt, die von einem Fahrzeuginsassen wahrgenommen werden kann. Die Anzeigeeinheit ist dabei etwas vertieft auf der Oberseite der Instrumententafel angeordnet, so dass eine direkte Einsicht auf die Anzeigefläche der Anzeigeeinheit unterbunden wird, um so eine Blendung des Benutzers durch direkt ins Auge einfallendes Licht zu vermeiden.

Durch die Anordnung der Anzeigeeinheit in einer solchen Vertiefung auf der Oberseite der Instrumententafel sind jedoch auch Fremdobjekte, die auf der Anzeigeeinheit aufliegen, nicht ohne Weiteres von der normalen Augenposition der Fahrzeuginsassen sichtbar. Diese Fremdobjekte liegen jedoch im Strahlengang des Anzeigebilds und können so Teile der Anzeige verdecken, so dass eventuell gesetzlich relevante Anzeigesymbole, wie beispielsweise Geschwindigkeitsanzeige, Kammerleuchten, Restreichweite und dergleichen nicht sichtbar sind, aber auch das Fehlen dieser Anzeigesymbole nicht bemerkt wird, da diese nicht dauerhaft angezeigt werden.

Eine Nutzung eines Deckglases, wie es beispielsweise bei klassischen Headup-Display-Anzeigen verwendet wird, ist bei derartigen Reflexionsanzeigevorrichtungen nachteilig, da dadurch neue Spiegelungen von Umgebungslicht auf die Windschutzscheibe entstehen können, die bei hoher Umgebungshelligkeit die Wahrnehmbarkeit des Reflexionsbildes erheblich beeinträchtigen.

Die Druckschrift EP 2 693 256 A1 offenbart ein Windschutzscheiben-Anzeigesystem, das eine Behinderung des von dem System projizierten Lichts erkennt und umfasst: eine Lichtquelle, einen Abtastspiegel, um den Lichtstrahl von der Lichtquelle zu einer gewünschten Stelle auf einer Windschutzscheibe zu reflektieren und dadurch einen Lichtweg zwischen dem Abtastspiegel und der gewünschten Stelle zu definieren. Mithilfe eines Lichtdetektors wird emittiertes Licht erfasst, das als Reaktion auf den Lichtstrahl erzeugt und von dem Abtastspiegel zu dem Lichtdetektor reflektiert wird, wobei sich das emittierte Licht von der gewünschten Stelle zu dem Abtastspiegel im Wesentlichen über den Lichtweg ausbreitet. Mit einer Steuerung wird auf der Grundlage eines Erfassungssignals von dem Lichtdetektor bestimmt, wann der Lichtweg behindert ist.

Die Druckschrift DE 10 2012 021 972 A1 offenbart eine Detektionsvorrichtung zur Detektion eines an und/oder über einem Innenverkleidungsteil eines Kraftfahrzeugs im Bereich einer im Innenverkleidungsteil ausgebildeten Austrittsöffnung befindlichen Gegenstandes, wobei die Detektionsvorrichtung einen Detektionsbereich aufweist, in welchem der Gegenstand in einer Erfassungsrichtung der Detektionsvorrichtung detektierbar ist, wobei die Erfassungsrichtung zumindest im Wesentlichen parallel zu einer Öffnungsebene der Austrittsöffnung verläuft.

Die Druckschrift EP 2693253 A1 offenbart ein Windschutzscheiben-Anzeigesystem mit einer Lichtquelle, um Licht von einer Vielzahl von Quellenorten auf eine gewünschte Stelle einer Windschutzscheibe zu projizieren, wobei die Anzahl der Quellenorte und der relative Abstand zwischen den Quellenorten derart ist, dass Licht, das von den Quellenorten emittiert und in ein Auge eines Bedieners reflektiert wird, wobei es eine reflektierte Lichtleistung aufweist, die geringer ist als ein Schwellenwert für die reflektierte Leistung.

Es ist Aufgabe der vorliegenden Erfindung, ein verbessertes Verfahren zur Detektion von Verdeckungen eines Anzeigebildes bei einem Reflexionsanzeigesystem zur Verfügung zu stellen.

### Offenbarung der Erfindung

Diese Aufgabe wird durch ein Verfahren zum Betreiben eines Frontscheiben-Anzeigesystems gemäß Anspruch 1 sowie durch eine Erkennungsvorrichtung und ein Anzeigesystem gemäß den nebengeordneten Ansprüchen gelöst.

Weitere Ausgestaltungen sind in den abhängigen Ansprüchen angegeben.

Gemäß einem ersten Aspekt ist ein Reflexionsanzeigesystem zur Anzeige eines Anzeigebilds für einen Fahrzeuginsassen eines Kraftfahrzeugs durch Reflexion eines Anzeigebilds an einer Frontscheibe vorgesehen, umfassend:
- eine Anzeigeeinheit, die ausgebildet ist, um das Anzeigebild über eine Anzeigefläche der Anzeigeeinheit auszugeben, wobei die Anzeigeeinheit so insbesondere in einer Vertiefung an einer Oberseite einer Instrumententafel angeordnet ist, dass eine Reflexion des Anzeigebilds über die Frontscheibe in einem Augenbereich eines Fahrzeuginsassen wahrnehmbar ist,
- eine Erkennungssensorik, die ausgebildet ist, um ein Fremdobjekt, das auf der Anzeigefläche vorhanden ist, zu detektieren;
- eine Steuereinheit, die ausgebildet ist, um bei Erkennen des Fremdobjekts auf der Anzeigefläche eine Störung der Anzeige des Anzeigebilds zu signalisieren
wobei die Erkennungssensorik eine Lichtschrankensensorik, insbesondere mit mindestens einer Lichtquelle zum Ausgeben von insbesondere nicht-sichtbarem Licht und mit mindestens einem Fotodetektor, aufweist, wobei die Lichtschrankensensorik ausgebildet ist, um durch Feststellen einer Unterbrechung eines oder mehrerer entlang der Oberfläche der Anzeigefläche der Anzeigeeinheit geführte Lichtstrahlen das Vorhandensein des Fremdobjekts zu erkennen, wobei die entlang der Oberfläche geführten Lichtstrahlen so ausgerichtet sind, dass diese an einer oder mehreren Reflexionsstellen auf der Anzeigefläche reflektiert werden.

Fremdobjekte, die auf der Instrumententafel abgelegt werden, können Komponenten zur Darstellung von Informationen über die Frontscheibe ganz oder teilweise verdecken. Wird das Reflexionsanzeigesystem zur Darstellung von sicherheitsrelevanten Informationen genutzt, ist es jedoch notwendig, eine Nichtanzeige einer Information von einer Blockierung der Anzeige der Information durch ein aufliegendes Fremdobjekt unterscheiden zu können.

Fremdobjekte im Sinne dieser Erfindung können beliebige Gegenstände sein, die die Wahrnehmung eines Anzeigebilds behindern, wie z.B. Kleidungsstücke, Papiere und dergleichen.

Insbesondere, wenn die Anzeigeeinheit in einer Vertiefung auf der Oberseite der Instrumententafel angeordnet ist, sind jedoch Fremdobjekte, die auf der Anzeigeeinheit aufliegen, nicht ohne Weiteres von der normalen Augenposition der Fahrzeuginsassen sichtbar. Diese Fremdobjekte liegen jedoch im Strahlengang des Anzeigebilds und können so Teile der Anzeige verdecken, so dass eventuell sicherheitsrelevante und gesetzlich vorgeschriebene Anzeigesymbole, wie beispielsweise Geschwindigkeitsanzeige, Kammerleuchten, Restreichweite und dergleichen nicht sichtbar sind. Jedoch kann nicht ohne Weiteres das Fehlen dieser Anzeigesymbole bemerkt werden, da diese nicht dauerhaft angezeigt werden.

Mithilfe des obigen Reflexionsanzeigesystems ist es möglich, zu erkennen, ob auf der Anzeigefläche der Anzeigeeinheit frei von aufliegenden Fremdobjekten ist. Dadurch kann detektiert werden, ob der Strahlengang des Reflexionsanzeigesystems durch ein Fremdobjekt auf der Anzeigefläche gestört ist. Eine Erkennung einer solchen Unterbrechung der Anzeige des Reflexionsanzeigesystems ist wesentlich, um eine Warnung oder sonstige Gegenmaßnahmen signalisieren zu können. Das obige Reflexionsanzeigesystem ermöglicht somit eine automatisierte Erkennung eines das Anzeigebild störenden Fremdobjekts auf der Anzeigefläche der Anzeigeeinheit.

Weiterhin kann die Anzeigeeinheit so in der Vertiefung angeordnet sein, dass das Anzeigebild, das auf der Anzeigefläche der Anzeigeeinheit dargestellt wird, nicht direkt in dem Augenbereich wahrnehmbar ist.

Die Ausgestaltung des Erkennungssensors kann auf verschiedene Arten erfolgen.

Der Erkennungssensor umfasst eine Lichtschranke, die über der Anzeigefläche einen oder mehrere Lichtstrahlen bewirkt, so dass bei Unterbrechung eines der Lichtstrahlen in einem Fotodetektor (Photodiode) eine Signaländerung erkannt werden kann, die zur Signalisierung einer Störung führen kann.

Gemäß einer weiteren Ausführungsform kann die Erkennungssensorik eine Reflexionslichtmesssensorik aufweisen, die zum Erkennen des Fremdobjekts auf der Anzeigefläche Licht auf die Anzeigefläche richtet und eine Stärke des an der Anzeigefläche und gegebenenfalls an dem Fremdobjekt reflektierten Licht empfängt, wobei die Steuereinheit ausgebildet ist, um bei einer Änderung der Stärke des reflektierten Lichts das Fremdobjekt zu erkennen.

Somit kann mithilfe von nicht-sichtbarem Licht eine Reflexionsmessung an der Anzeigefläche der Reflexionsanzeigeeinheit vorgenommen werden. Es wird erkannt, wenn eine Reflexionsänderung bezüglich eines Reflexionsgrades bei einer unverdeckten Anzeigefläche festgestellt wird, sodass die Reflexionsänderung auf das Vorhandensein eines Fremdobjekt hinweist.

Gemäß einer weiteren Ausführungsform kann die Erkennungssensorik eine Deckglassensorik aufweisen, bei der Licht in das Deckglas eingekoppelt wird und das eingekoppelte Licht nach seiner Auskopplung empfangen wird, wobei die Steuereinheit ausgebildet ist, um bei einer Änderung der Stärke des ausgekoppelten Lichts das Fremdobjekt zu erkennen.

Beispielsweise kann in das transparente Deckglas (aus Kunststoff oder Glas oder einem sonstigen transparenten Material) der Anzeigefläche ein Infrarotlicht eingekoppelt werden, wobei ein aufliegendes Fremdobjekt die Reflexionscharakteristika des in dem Deckglas geführten Lichtstrahls verändert und dadurch eine Erkennung eines aufliegenden Fremdobjekts erkannt werden kann. Mithilfe einer solchen Deckglassensorik kann zudem auch eine Beschlags- oder Vereisungserkennung durchgeführt werden.

Gemäß einer weiteren Ausführungsform kann die Erkennungssensorik eine Touchsensorik aufweisen, die ein Messsignal entsprechend einer Kapazitätsänderung durch Vorhandensein eines Fremdobjekts auf der Anzeigefläche bereitstellt, wobei die Steuereinheit ausgebildet ist, um bei einer Änderung des Messsignals das Fremdobjekt zu erkennen.

Diesbezüglich kann der Erkennungssensor eine kapazitive Sensorik umfassen, so dass Objekte mit einer kapazitiven Masse durch Kapazitätsänderung erkannt werden können.

Gemäß einer weiteren Ausführungsform kann die Erkennungssensorik eine Bilderfassungssensorik umfassen, die insbesondere eine oder mehrere Kameras und/oder einen oder mehrere Tiefensensoren aufweist, wobei mithilfe eines Objekterkennungsverfahrens das Vorhandensein eines Fremdobjekt auf der Anzeigefläche festgestellt wird.

Mithilfe einer Tiefenkamera, insbesondere basierend auf LiDAR- oder Radartechnik, können Objekte, die in der Vertiefung der Instrumententafel sich befinden, eine vom unverdeckten Zustand abweichende dreidimensionale Topologie aufweisen. Eine solche 3D-Topologie kann mithilfe der Tiefenkamera erkannt werden.

Gemäß einer weiteren Ausführungsform kann die Erkennungssensorik eine Ultraschallsensorik umfassen, wobei ein Ultraschallsignal auf die Anzeigefläche gerichtet wird und eine Stärke eines Empfangssignals detektiert wird, wobei die Steuereinheit ausgebildet ist, um bei einer Änderung der Stärke des Empfangssignals das Fremdobjekt zu erkennen.

Mithilfe der Ultraschallerkennung kann eine Erkennung einer Änderung einer Reflexionscharakteristik von gesendeten und empfangenen Ultraschallsignalen erkennbar sein.

Gemäß einem weiteren Aspekt ist ein Kraftfahrzeug vorgesehen, umfassend:
- eine Instrumententafel zwischen einer Frontscheibe des Kraftfahrzeugs und einer Lenksäule;
- das obige Reflexionsanzeigesystem.

Gemäß einem weiteren Aspekt ist ein Verfahren zum Erkennen eines Fremdobjekts auf einer Anzeigeeinheit eines Reflexionsanzeigesystems vorgesehen, die eine Reflexion eines Anzeigebilds an einer Frontscheibe in einen Augenbereich eines Fahrzeuginsassen bewirkt, wobei mithilfe einer Erkennungssensorik das Vorhandensein eines Fremdobjekts auf einer Anzeigefläche der Anzeigeeinheit erkannt wird und wobei bei Feststellen des Vorhandenseins eines Fremdobjekt auf der Anzeigefläche das Vorhandensein des Fremdobjekts signalisiert wird wobei die Erkennungssensorik eine Lichtschrankensensorik, insbesondere mit mindestens einer Lichtquelle zum Ausgeben von insbesondere nicht-sichtbarem Licht und mit mindestens einem Fotodetektor, aufweist, wobei die Lichtschrankensensorik ausgebildet ist, um durch Feststellen einer Unterbrechung eines oder mehrerer entlang der Oberfläche der Anzeigefläche der Anzeigeeinheit geführte Lichtstrahlen das Vorhandensein des Fremdobjekts zu erkennen, wobei die entlang der Oberfläche geführten Lichtstrahlen so ausgerichtet sind, dass diese an einer oder mehreren Reflexionsstellen auf der Anzeigefläche reflektiert werden.

### Kurzbeschreibung der Zeichnung

Ausführungsformen werden nachfolgend anhand der beigefügten Zeichnungen näher erläutert. Es zeigen:
- Figur 1: eine schematische Querschnittsdarstellung eines Reflexionsanzeigesystems in einem Kraftfahrzeug mit einer Lichtschranke als Erkennungssensorik;
- Figuren: 2a und 2b detailliertere Querschnittsdarstellungen des Reflexionsanzeigesystems mit einer Lichtschrankensensorik als Erkennungssensorik zur Erkennung von Fremdobjekten auf der Anzeigefläche;
- Figur 3: eine Querschnittsdarstellung der Anzeigeeinheit mit einer Reflexionslichtmesssensorik zur Messung einer Stärke von auf die Anzeigefläche gerichteten Lichts;
- Figur 4: eine Querschnittsdarstellung der Anzeigeeinheit mit einer Reflexionslichtmesssensorik zur Messung einer Stärke einer Lichtauskopplung von in das Deckglas der Anzeigeeinheit eingekoppeltem Licht;
- Figur 5: eine Querschnittsdarstellung einer Ausbildung der Anzeigefläche mit einer Touchsensorik, um Fremdobjekte mit einer kapazitiven Masse durch Änderung einer Kapazität der Anzeigefläche zu erkennen;
- Figur 6: eine Querschnittsdarstellung des Reflexionsanzeigesystems mit einem Bilderfassungssensorik als Erkennungssensor für ein Fremdobjekt auf der Anzeigefläche der Anzeigeeinheit;
- Figur 7: ein Flussdiagramm zur Veranschaulichung eines Verfahrens zum Signalisieren eines Vorhandenseins eines Fremdobjekt auf der Anzeigefläche der Anzeigeeinheit.

### Beschreibung von Ausführungsformen

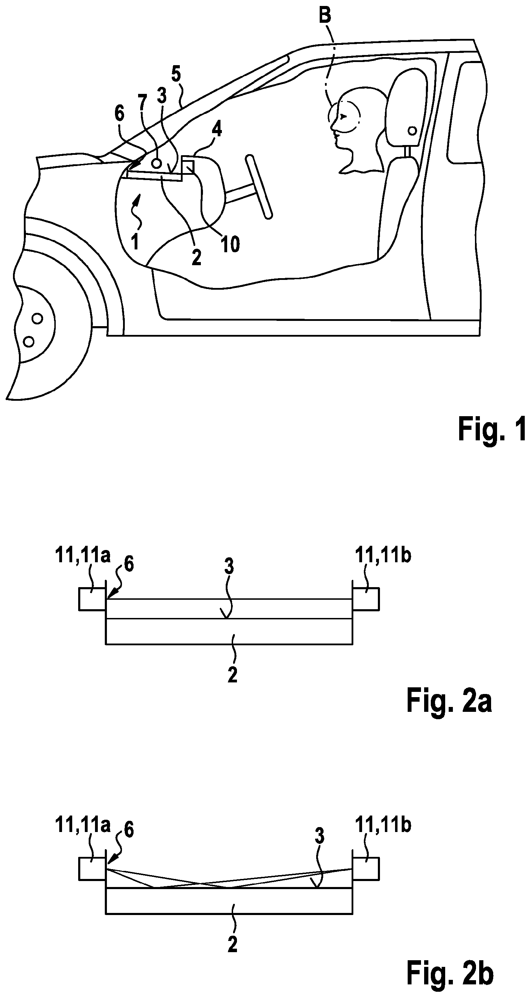

Figur 1 zeigt eine schematische Querschnittsdarstellung durch ein Kraftfahrzeug mit einem Reflexionsanzeigesystem 1. Das Reflexionsanzeigesystem ist an einer Oberseite einer Instrumententafel 4 angeordnet und weist eine Anzeigeeinheit 2 auf, die eine Anzeigefläche 3 zur Darstellung eines Anzeigebilds umfasst. Die Anzeigeeinheit 2 ist auf der Oberseite der Instrumententafel 4 unterhalb einer Frontscheibe 5, angeordnet.

Die Anzeigefläche 3 ist bezüglich der Frontscheibe 5 so ausgerichtet, dass ein auf der Anzeigefläche der Anzeigeeinheit 2 angezeigtes Anzeigebild an einem unteren Bereich der Innenseite der Frontscheibe 5 reflektiert wird und durch einen Fahrzeuginsassen in einem Augenbereich B wahrgenommen werden kann. Dadurch kann die Ausrichtung der Anzeigeeinheit 2 bzw. dessen Anzeigefläche vorzugsweise im Wesentlichen parallel zur Fahrzeug Längs- und Querachse sein oder von diesen um einen Winkel von nicht mehr als 0-20° abweichen.

Die Anzeigeeinheit 2 kann in einer Vertiefung 6 der Instrumententafel angebracht sein, so dass vom Fahrzeuginsassen kein direkter Blick auf die Anzeigefläche 3 der Anzeigeeinheit 2 möglich ist und ein Blenden der Fahrzeuginsassen durch direktes Licht von der Anzeigefläche 3 in den Augenbereich B vermieden wird. Weiterhin ist die Anzeigefläche 3 der Anzeigeeinheit 2 so ausgerichtet, dass ein angezeigtes Anzeigebild an der Innenseite der Frontscheibe 5 reflektiert wird und von einem Fahrzeuginsassen in einem Augenbereich B als Reflexionsbild auf der Frontscheibe 5 wahrgenommen werden kann.

Die Anzeigeeinheit 2 ist vorzugsweise als Mikro-LED-Anzeigeeinheit ausgebildet, um ein leuchtstarkes Anzeigebild bereitzustellen, so dass die erzeugte Reflexion auch bei hoher Umgebungshelligkeit über den entsprechenden Bereich der Frontscheibe 5 wahrgenommen werden kann.

Da die Anzeigeeinheit 2 in der Vertiefung 6 an der Oberseite der Instrumententafel 4 angeordnet ist, kann auch ein Fremdobjekt 7 in diese Vertiefung 6 gelangen und damit auf der Anzeigefläche 3 der Anzeigeeinheit 2 zu liegen kommen. Ein auf der Anzeigeeinheit 2 angezeigtes Anzeigebild kann dann nicht oder nur teilweise als Reflexionsbild durch einen Fahrzeuginsassen wahrgenommen werden.

Zur Erkennung, ob das Fremdobjekt 7 auf der Anzeigefläche 3 aufliegt oder nicht, kann eine Erkennungssensorik 10 vorgesehen sein, die in Fig. 1 zunächst prinzipiell angegeben ist. Die Erkennungssensorik 10 kann verschiedene Messprinzipien nutzen und diese gegebenenfalls kombinieren, um ein auf der Anzeigefläche 3 aufliegendes Fremdobjekt 7 zu erkennen.

Die Erkennungssensorik 10 steht mit einer Steuereinheit 9 in Kommunikationsverbindung, die bei einem Erkennen des Fremdobjekts 7 mithilfe der Erkennungssensorik 10 das Blockieren der Anzeige durch das Fremdobjekt 7 in geeigneter Weise dem Fahrzeuginsassen, insbesondere dem Fahrer des Kraftfahrzeugs, signalisiert, beispielsweise durch ein akustisches und/oder visuelles Warnsignal.

In Figur 2a ist eine Querschnittsdarstellung des Reflexionsanzeigesystems 1 mit einer Lichtschrankensensorik 11 als Beispiel für einen Erkennungssensor 10 dargestellt, die nicht unter den Schutzumfang der Ansprüche fällt. Die Lichtschrankensensorik 11 weist einen oder eine Vielzahl von über der Anzeigefläche 3 verlaufenden Lichtstrahlen auf, die von einer oder mehreren Lichtquellen 11a ausgegeben werden und die auf einen oder mehrere Photodetektoren 11b gerichtet sind. Wird einer der Lichtstrahlen unterbrochen durch ein aufliegendes Fremdobjekt 7, so kann dies anhand eines Signals über den Photodetektor 11b oder die Photodetektoren 11b erkannt werden.

Die Lichtstrahlen sind vorzugsweise flächenparallel zu der Anzeigefläche 3 und in einem geringen Abstand von beispielsweise zwischen 0,1 bis 1 cm über der Anzeigefläche 3 angeordnet.

In einer Ausführungsform gemäß der unabhängigen Ansprüche, die in der Querschnittsdarstellung des Reflexionsanzeigesystems 1 der Figur 2b dargestellt ist, werden ein oder mehrere der Lichtstrahlen der sich zwischen der einen oder der mehreren Lichtquellen 11a und dem einen oder den mehreren Fotodetektoren 11b erstreckende Lichtstrahlen auch an der Oberfläche der Anzeigefläche 3 reflektiert. Dies kann vorzugsweise über flächig auf der Anzeigefläche 3 verteilt angeordneten Reflexionsstellen R erfolgen, an denen Totalreflexion vorliegt. Auf diese Weise können auch aufliegende Fremdobjekte 7 mit einer geringeren Dicke als der Abstand zwischen den Lichtstrahlen und der Oberfläche der Anzeigefläche 3, wie bei Figur 2a, erkannt werden.

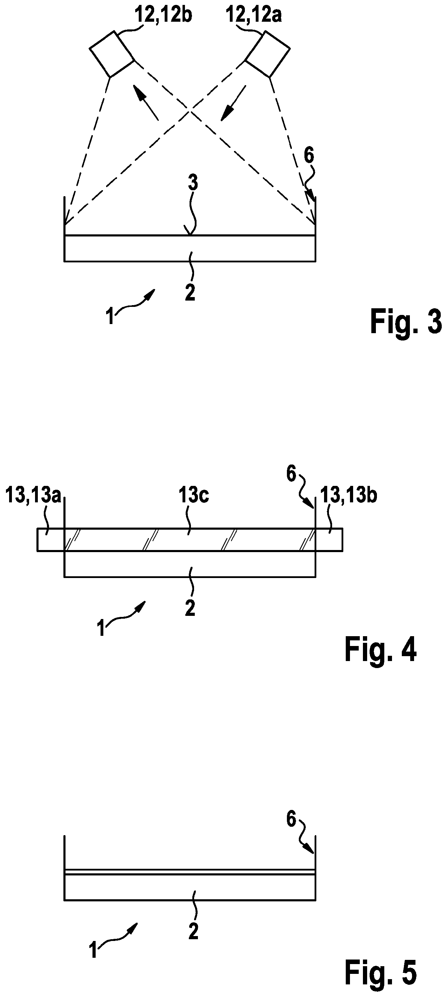

In Figur 3 ist eine zusätzliche Erkennungssensorik 10 dargestellt, die mithilfe einer Reflexionslichtmesssensorik 12 ausgebildet ist. Die Reflexionslichtmesssensorik 12 weist eine Lichtquelle 12a auf, die auf die Anzeigefläche 3 gerichtet ist und vorzugsweise Licht über die gesamte Anzeigefläche 3 verteilt richtet. Die Lichtquelle 12a kann vorzugsweise eine Infrarot-Lichtquelle aufweisen. Die Lichtquelle 12a kann in Richtung einer Quererstreckung des Kraftfahrzeugs seitlich des Reflexionsanzeigesystems 1 angeordnet sein, sodass der Strahlengang zwischen Anzeigeeinheit 2, der Frontscheibe 5 und dem Augenbereich B des Fahrzeuginsassen nicht unterbrochen wird.

Mithilfe eines Photodetektors 12b wird die Stärke des von der Anzeigefläche 3 reflektierten Lichts erfasst und dessen Stärke gemessen. Der Photodetektor 12b kann in Richtung einer Quererstreckung des Kraftfahrzeugs seitlich des Reflexionsanzeigesystems 1 angeordnet sein, sodass der Strahlengang zwischen Anzeigeeinheit 2, der Frontscheibe 5 und dem Augenbereich B des Fahrzeuginsassen nicht unterbrochen wird. Ändert sich das Maß der Stärke des reflektierten Lichts, so kann in der Steuereinheit 9 auf ein aufliegendes Fremdobjekt 7 geschlossen werden.

In Figur 4 ist eine zusätzliche Erkennungssensorik 10 in Form einer Deckglassensorik 13 dargestellt, bei der Licht, insbesondere nicht sichtbares Licht, wie z.B. Infrarotlicht, durch eine Lichtquelle 13a seitlich in ein transparentes Deckglas 13c der Anzeigefläche 3 eingekoppelt werden kann. Das eingekoppelte Licht kann durch Totalreflexionen innerhalb des Deckglases 13c geführt und an anderer Stelle des Randes des Deckglases 13c durch einen Photodetektor 13b ausgekoppelt und empfangen werden. Ein aufliegendes Fremdobjekt 7 ändert die Reflexionseigenschaften an der Außenfläche des Deckglases 13c im Bereich des aufliegenden Fremdobjekts 7, so dass ein Photodetektor 13b, der beispielsweise der Lichtquelle 13a bezüglich des Deckglases 13c gegenüberliegt, eine Änderung der Stärke des empfangenen durch das Deckglas geleiteten Lichts empfängt bzw. erkennen kann. Diese Signaländerung in der Steuereinheit 9 kann als Vorliegen eines aufliegenden Fremdobjekts 7 interpretiert werden.

Figur 5 zeigt eine Ausführungsform, bei der die Oberfläche der Anzeigeeinheit 2 mit einer Touchsensorik 14 versehen sein kann. Die Touchsensorik 14 entspricht einer kapazitiven Sensorik. Fremdobjekte 7, die eine kapazitive Masse aufweisen, können so durch eine Kapazitätsänderung in an sich bekannter Weise durch die Steuereinheit 9 erkannt werden.

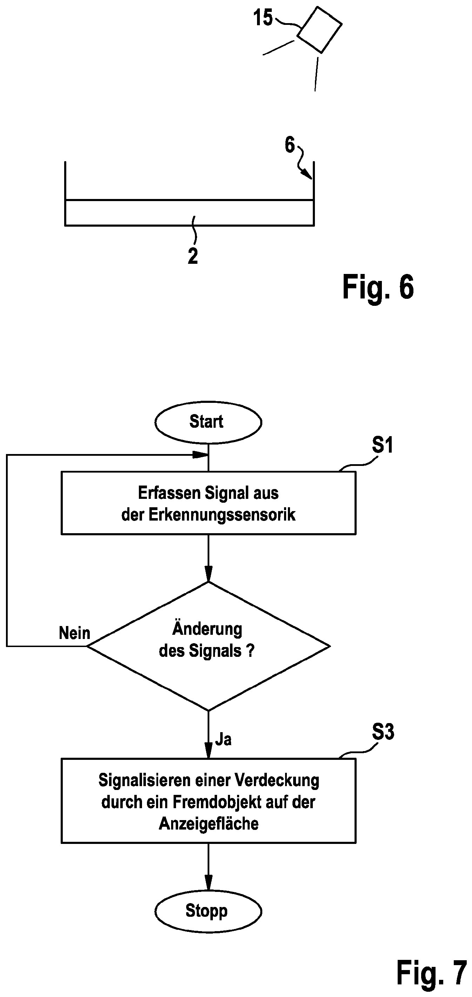

Wie in der Ausführungsform der Figur 6 dargestellt ist, kann weiterhin auf die Anzeigefläche 3 der Anzeigeeinheit 2 eine Bilderfassungssensorik 15, z.B. mit einer oder mehreren Kameras, gerichtet sein, sodass unmittelbar durch ein geeignetes in der Steuereinheit 9 ausgeführtes Bilderkennungsverfahren ein aufliegendes Fremdobjekt 7 auf der Anzeigefläche 3 erkannt werden kann.

Alternativ kann die Bilderfassungssensorik 15 auch eine Tiefenkamera (Lidar, Radar) umfassen, die in der Lage ist, die dreidimensionale Topologie eines Fremdobjekts 7 in der Vertiefung 6 auf der Oberseite der Instrumententafel 4 zu erkennen. Befindet sich ein Fremdobjekt 7 auf der Anzeigefläche 3 der Anzeigeeinheit 2 innerhalb der Vertiefung 6, so ändert sich die dreidimensionale Topologie, die durch die entsprechende Tiefenkamera erkannt werden kann. Alternativ kann anstelle der Bilderfassungssensorik 15 auch ein Ultraschallsensor vorgesehen sein, dessen Reflexionssignal sich entsprechend bei Vorliegen eines Fremdobjekts 7 auf der Anzeigefläche 3 ändern kann.

Figur 7 zeigt ein Flussdiagramm zur Veranschaulichung eines Verfahrens zum Erkennen eines Fremdobjekts 7, das in der Steuereinheit ausgeführt werden kann.

In Schritt S1 wird ein Signal der Erkennungssensorik 10 erfasst.

In Schritt S2 wird überprüft, ob eine Signaländerung der Erkennungssensorik vorliegt. Liegt eine Signaländerung vor (Alternative: ja), so wird das Verfahren mit Schritt S3 fortgesetzt, andernfalls (Alternative: Nein) wird zu Schritt S1 zurückgesprungen.

Wird in Schritt S2 erkannt, dass ein Fremdobjekt 7 auf der Anzeigefläche vorhanden ist, so wird das Vorliegen eines Fremdobjekts 7 auf der Anzeigefläche 3 signalisiert. Das Signalisieren kann mithilfe eines optischen oder akustischen Signals oder in sonstiger Weise erfolgen, die die Fahrzeuginsassen darauf aufmerksam macht, dass die Anzeige zumindest teilweise verdeckt ist.

## Patentansprüche

1. Reflexionsanzeigesystem (1) zur Anzeige eines Anzeigebilds für einen Fahrzeuginsassen eines Kraftfahrzeugs durch Reflexion eines Anzeigebilds an einer Frontscheibe (5), umfassend:
- eine Anzeigeeinheit (2), die ausgebildet ist, um das Anzeigebild über eine Anzeigefläche (3) der Anzeigeeinheit (2) auszugeben, wobei die Anzeigeeinheit (2) so, insbesondere in einer Vertiefung (6), an einer Oberseite einer Instrumententafel (4) angeordnet ist, dass eine Reflexion des Anzeigebilds über die Frontscheibe (5) in einem Augenbereich (B) eines Fahrzeuginsassen wahrnehmbar ist,
- eine Erkennungssensorik (10), die ausgebildet ist, um ein Fremdobjekt (7), das auf der Anzeigefläche (3) vorhanden ist, zu detektieren;
- eine Steuereinheit (9), die ausgebildet ist, um bei Erkennen des Fremdobjekts (7) auf der Anzeigefläche (3) eine Störung der Anzeige des Anzeigebilds zu signalisieren
wobei die Erkennungssensorik (10) eine Lichtschrankensensorik (11), insbesondere mit mindestens einer Lichtquelle (11a) zum Ausgeben von insbesondere nicht-sichtbarem Licht und mit mindestens einem Fotodetektor (11b), aufweist, wobei die Lichtschrankensensorik (11), ausgebildet ist, um durch Feststellen einer Unterbrechung eines oder mehrerer entlang der Oberfläche der Anzeigefläche (3) der Anzeigeeinheit (2) geführte Lichtstrahlen das Vorhandensein des Fremdobjekts (7) zu erkennen, wobei die entlang der Oberfläche geführten Lichtstrahlen so ausgerichtet sind, dass diese an einer oder mehreren Reflexionsstellen auf der Anzeigefläche (3) reflektiert werden.

2. Reflexionsanzeigesystem (1) nach Anspruch 1, wobei die Anzeigeeinheit (2) so in der Vertiefung (6) angeordnet ist, dass das Anzeigebild nicht direkt in dem Augenbereich (B) wahrnehmbar ist.

3. Reflexionsanzeigesystem (1) nach einem der Ansprüche 1 bis 2, wobei die Erkennungssensorik (10) eine Reflexionslichtmesssensorik (12) aufweist, die zum Erkennen des Fremdobjekts (7) auf der Anzeigefläche (3) Licht auf die Anzeigefläche (3) richtet und eine Stärke des an der Anzeigefläche (3) und gegebenenfalls an dem Fremdobjekt (7) reflektierten Licht empfängt, wobei die Steuereinheit (9) ausgebildet ist, um bei einer Änderung der Stärke des reflektierten Lichts das Fremdobjekt (7) zu erkennen.

4. Reflexionsanzeigesystem (1) nach einem der Ansprüche 1 bis 3, wobei die Erkennungssensorik (10) eine Deckglassensorik (13) aufweist, bei der Licht in ein Deckglas (13c) eingekoppelt wird und das eingekoppelte Licht nach seiner Auskopplung empfangen wird, wobei die Steuereinheit (9) ausgebildet ist, um bei einer Änderung der Stärke des ausgekoppelten Lichts das Fremdobjekt (7) zu erkennen.

5. Reflexionsanzeigesystem (1) nach einem der Ansprüche 1 bis 4, wobei die Erkennungssensorik (10) eine Touchsensorik (14) aufweist, die ein Messsignal entsprechend einer Kapazitätsänderung durch Vorhandensein des Fremdobjekts (7) auf der Anzeigefläche (3) bereitstellt, wobei die Steuereinheit (9) ausgebildet ist, um bei einer Änderung des Messsignals das Fremdobjekt (9) zu erkennen.

6. Reflexionsanzeigesystem (1) nach einem der Ansprüche 1 bis 5, wobei die Erkennungssensorik (10) eine Bilderfassungssensorik (15) umfasst, die insbesondere eine oder mehrere Kameras und/oder einen oder mehrere Tiefensensoren aufweist, wobei mithilfe eines Objekterkennungsverfahrens das Vorhandensein eines Fremdobjekt auf der Anzeigefläche festgestellt wird.

7. Reflexionsanzeigesystem (1) nach einem der Ansprüche 1 bis 6, wobei die Erkennungssensorik (10) eine Ultraschallsensorik umfasst, wobei ein Ultraschallsignal auf die Anzeigefläche gerichtet wird und eine Stärke eines Empfangssignals detektiert wird, wobei die Steuereinheit (9) ausgebildet ist, um bei einer Änderung der Stärke des Empfangssignals das Fremdobjekt (7) zu erkennen.

8. Kraftfahrzeug umfassend:
- eine Instrumententafel (7) zwischen einer Frontscheibe (5) des Kraftfahrzeugs und einer Lenksäule;
- das Reflexionsanzeigesystem (1) nach einem der Ansprüche 1-7.

9. Verfahren zum Erkennen eines Fremdobjekts (7) auf einer Anzeigeeinheit (2) eines Reflexionsanzeigesystems (1), die eine Reflexion eines Anzeigebilds an einer Frontscheibe (5) in einen Augenbereich (B) eines Fahrzeuginsassen bewirkt, wobei mithilfe einer Erkennungssensorik (10) das Vorhandensein des Fremdobjekts (7) auf einer Anzeigefläche (3) der Anzeigeeinheit (2) erkannt wird und wobei bei Feststellen des Vorhandenseins des Fremdobjekts (7) auf der Anzeigefläche (3) das Vorhandensein des Fremdobjekts (7) signalisiert wird, wobei eine Erkennungssensorik (10) eine Lichtschrankensensorik (11), insbesondere mit mindestens einer Lichtquelle (11a) zum Ausgeben von insbesondere nicht-sichtbarem Licht und mit mindestens einem Fotodetektor (11b), vorgesehen ist, wobei eine Lichtschrankensensorik (11) ausgebildet ist, um durch Feststellen einer Unterbrechung eines oder mehrerer entlang der Oberfläche der Anzeigefläche (3) der Anzeigeeinheit (2) geführte Lichtstrahlen das Vorhandensein des Fremdobjekts (7) zu erkennen, wobei die entlang der Oberfläche geführten Lichtstrahlen so ausgerichtet sind, dass diese an einer oder mehreren Reflexionsstellen auf der Anzeigefläche (3) reflektiert werden.

## Claims

1. Reflection display system (1) for displaying a display image to a vehicle occupant of a motor vehicle by reflection of a display image on a windscreen (5), comprising:
• a display unit (2) which is designed to output the display image via a display surface (3) of the display unit (2), wherein the display unit (2) is arranged on an upper side of an instrument panel (4), in particular in a recess (6), such that a reflection of the display image via the windscreen (5) is perceptible in an eye region (B) of a vehicle occupant,
• a detection sensor system (10) which is designed to detect a foreign object (7) which is present on the display surface (3);
• a control unit (9) which is designed to signal a disruption of the display of the display image upon detection of the foreign object (7) on the display surface (3),
wherein the detection sensor system (10) has a light barrier sensor system (11), in particular with at least one light source (11a) for outputting in particular non-visible light and with at least one photodetector (11b), wherein the light barrier sensor system (11) is designed to detect the presence of the foreign object (7) by determining an interruption of one or more light beams guided along the surface of the display surface (3) of the display unit (2), wherein the light beams guided along the surface are oriented such that they are reflected at one or more reflection points on the display surface (3).

2. Reflection display system (1) according to claim 1, wherein the display unit (2) is arranged in the recess (6) such that the display image is not directly perceptible in the eye region (B).

3. Reflection display system (1) according to one of claims 1 to 2, wherein the detection sensor system (10) has a reflection light measurement sensor system (12) which, for detecting the foreign object (7) on the display surface (3), directs light onto the display surface (3) and receives an intensity of the light reflected at the display surface (3) and optionally at the foreign object (7), wherein the control unit (9) is designed to detect the foreign object (7) upon a change in the intensity of the reflected light.

4. Reflection display system (1) according to one of claims 1 to 3, wherein the detection sensor system (10) has a cover glass sensor system (13) in which light is coupled into a cover glass (13c) and the coupled light is received after its outcoupling, wherein the control unit (9) is designed to detect the foreign object (7) upon a change in the intensity of the outcoupled light.

5. Reflection display system (1) according to one of claims 1 to 4, wherein the detection sensor system (10) has a touch sensor system (14) which provides a measurement signal corresponding to a capacitance change due to the presence of the foreign object (7) on the display surface (3), wherein the control unit (9) is designed to detect the foreign object (9) upon a change in the measurement signal.

6. Reflection display system (1) according to one of claims 1 to 5, wherein the detection sensor system (10) comprises an image capture sensor system (15) which in particular has one or more cameras and/or one or more depth sensors, wherein the presence of a foreign object on the display surface is determined by means of an object recognition method.

7. Reflection display system (1) according to one of claims 1 to 6, wherein the detection sensor system (10) comprises an ultrasound sensor system, wherein an ultrasound signal is directed onto the display surface and an intensity of a received signal is detected, wherein the control unit (9) is designed to detect the foreign object (7) upon a change in the intensity of the received signal.

8. Motor vehicle comprising:
• an instrument panel (7) between a windscreen (5) of the motor vehicle and a steering column;
• the reflection display system (1) according to one of claims 1-7.

9. Method for detecting a foreign object (7) on a display unit (2) of a reflection display system (1) which causes a reflection of a display image on a windscreen (5) into an eye region (B) of a vehicle occupant, wherein the presence of the foreign object (7) on a display surface (3) of the display unit (2) is detected by means of a detection sensor system (10), and wherein the presence of the foreign object (7) is signaled upon determining the presence of the foreign object (7) on the display surface (3), wherein a detection sensor system (10) has a light barrier sensor system (11), in particular with at least one light source (11a) for outputting in particular non-visible light and with at least one photodetector (11b), wherein a light barrier sensor system (11) is designed to detect the presence of the foreign object (7) by determining an interruption of one or more light beams guided along the surface of the display surface (3) of the display unit (2), wherein the light beams guided along the surface are oriented such that they are reflected at one or more reflection points on the display surface (3).

## Revendications

1. Système d'affichage par réflexion (1) pour afficher une image d'affichage à un occupant de véhicule d'un véhicule automobile par réflexion d'une image d'affichage sur un pare-brise (5), comprenant :
• une unité d'affichage (2) qui est conçue pour délivrer l'image d'affichage via une surface d'affichage (3) de l'unité d'affichage (2), l'unité d'affichage (2) étant disposée sur un côté supérieur d'un tableau de bord (4), en particulier dans un évidement (6), de telle sorte qu'une réflexion de l'image d'affichage via le pare-brise (5) soit perceptible dans une région oculaire (B) d'un occupant de véhicule,
• un système de capteurs de détection (10) qui est conçu pour détecter un objet étranger (7) qui est présent sur la surface d'affichage (3) ;
• une unité de commande (9) qui est conçue pour signaler une perturbation de l'affichage de l'image d'affichage lors de la détection de l'objet étranger (7) sur la surface d'affichage (3),
dans lequel le système de capteurs de détection (10) présente un système de capteurs à barrière lumineuse (11), en particulier avec au moins une source de lumière (11a) pour délivrer en particulier de la lumière non visible et avec au moins un photodétecteur (11b), le système de capteurs à barrière lumineuse (11) étant conçu pour détecter la présence de l'objet étranger (7) en déterminant une interruption d'un ou plusieurs faisceaux lumineux guidés le long de la surface de la surface d'affichage (3) de l'unité d'affichage (2), les faisceaux lumineux guidés le long de la surface étant orientés de telle sorte qu'ils soient réfléchis en un ou plusieurs points de réflexion sur la surface d'affichage (3).

2. Système d'affichage par réflexion (1) selon la revendication 1, dans lequel l'unité d'affichage (2) est disposée dans l'évidement (6) de telle sorte que l'image d'affichage ne soit pas directement perceptible dans la région oculaire (B).

3. Système d'affichage par réflexion (1) selon l'une des revendications 1 à 2, dans lequel le système de capteurs de détection (10) présente un système de capteurs de mesure de lumière réfléchie (12) qui, pour détecter l'objet étranger (7) sur la surface d'affichage (3), dirige de la lumière sur la surface d'affichage (3) et reçoit une intensité de la lumière réfléchie sur la surface d'affichage (3) et éventuellement sur l'objet étranger (7), l'unité de commande (9) étant conçue pour détecter l'objet étranger (7) lors d'un changement de l'intensité de la lumière réfléchie.

4. Système d'affichage par réflexion (1) selon l'une des revendications 1 à 3, dans lequel le système de capteurs de détection (10) présente un système de capteurs de verre de protection (13) dans lequel de la lumière est couplée dans un verre de protection (13c) et la lumière couplée est reçue après son découplage, l'unité de commande (9) étant conçue pour détecter l'objet étranger (7) lors d'un changement de l'intensité de la lumière découplée.

5. Système d'affichage par réflexion (1) selon l'une des revendications 1 à 4, dans lequel le système de capteurs de détection (10) présente un système de capteurs tactiles (14) qui fournit un signal de mesure correspondant à un changement de capacité dû à la présence de l'objet étranger (7) sur la surface d'affichage (3), l'unité de commande (9) étant conçue pour détecter l'objet étranger (9) lors d'un changement du signal de mesure.

6. Système d'affichage par réflexion (1) selon l'une des revendications 1 à 5, dans lequel le système de capteurs de détection (10) comprend un système de capteurs de capture d'images (15) qui présente en particulier une ou plusieurs caméras et/ou un ou plusieurs capteurs de profondeur, la présence d'un objet étranger sur la surface d'affichage étant déterminée au moyen d'un procédé de reconnaissance d'objets.

7. Système d'affichage par réflexion (1) selon l'une des revendications 1 à 6, dans lequel le système de capteurs de détection (10) comprend un système de capteurs à ultrasons, un signal ultrasonore étant dirigé sur la surface d'affichage et une intensité d'un signal reçu étant détectée, l'unité de commande (9) étant conçue pour détecter l'objet étranger (7) lors d'un changement de l'intensité du signal reçu.

8. Véhicule automobile comprenant :
• un tableau de bord (7) entre un pare-brise (5) du véhicule automobile et une colonne de direction ;
• le système d'affichage par réflexion (1) selon l'une des revendications 1 à 7.

9. Procédé pour détecter un objet étranger (7) sur une unité d'affichage (2) d'un système d'affichage par réflexion (1) qui provoque une réflexion d'une image d'affichage sur un pare-brise (5) dans une région oculaire (B) d'un occupant de véhicule, dans lequel la présence de l'objet étranger (7) sur une surface d'affichage (3) de l'unité d'affichage (2) est détectée au moyen d'un système de capteurs de détection (10), et dans lequel la présence de l'objet étranger (7) est signalée lors de la constatation de la présence de l'objet étranger (7) sur la surface d'affichage (3), dans lequel un système de capteurs de détection (10) présente un système de capteurs à barrière lumineuse (11), en particulier avec au moins une source de lumière (11a) pour délivrer en particulier de la lumière non visible et avec au moins un photodétecteur (11b), un système de capteurs à barrière lumineuse **(11)** étant conçu pour détecter la présence de l'objet étranger (7) en déterminant une interruption d'un ou plusieurs faisceaux lumineux guidés le long de la surface de la surface d'affichage (3) de l'unité d'affichage (2), les faisceaux lumineux guidés le long de la surface étant orientés de telle sorte qu'ils soient réfléchis en un ou plusieurs points de réflexion sur la surface d'affichage (3).
